# EUROPÄISCHE PATENTANMELDUNG

(11) **EP 0 795 643 A1**
(43) Veröffentlichungstag der Anmeldung: **17.09.1997**
(21) Anmeldenummer: 97105597.5
(22) Anmeldetag: 21.02.1995
(51) Int. Cl.: D21F 3/02

(54) **Schuhpresse für eine Papiermaschine**

(30) Priorität: 04.05.1994 DE 4415645
(62) Teilanmeldung aus: 95102386.0
(71) Anmelder: Voith Sulzer Papiermaschinen Gesellschaft mbH, 89522 Heidenheim (DE)
(72) Erfinder: Zuefle, Thomas, 89518 Heidenheim (DE); Steiner, Karl, Dr., 89542 Herbrechtingen (DE); Schiel, Christian, 89520 Heidenheim (DE)
(74) Vertreter: Gahlert, Stefan, Dr.-Ing.

(57) **Zusammenfassung**

Es wird eine Schuhpresse für eine Papiermaschine angegeben, die zumindest ein im wesentlichen in Axialrichtung der Walze (30) verlaufendes Leistenelement (32) umfaßt, das unmittelbar mit dem Preßschuh (54) gekoppelt ist. So läßt sich bei Schuhpreßwalzen eine sichere Einstellung eines hydro-dynamischen Schmierkeils erreichen.

## Beschreibung

Die Erfindung betrifft eine Schuhpresse für eine Papiermaschine, mit einem zwischen einer Walze und einer Gegenwalze gebildeten Preßspalt mit einem hydraulisch an die Gegenwalze anpreßbarem Preßschuh, über den ein Preßmantel umläuft, wobei die Walze zumindest ein außerhalb des Preßspaltes im wesentlichen axial angeordnetes Leistenelement aufweist, das gegen im wesentlichen radiale Kräfte abgestützt ist.

Eine derartige Schuhpresse ist aus der DE-A-3 311 998 bekannt. Die bekannte Anordnung umfaßt eine Schuhpreßwalze, bei der ein Preßmantel über Führungsleisten geführt ist, die mittels Federelementen an einem inneren, biegesteifen Tragkörper abgestützt sind, so daß ein biegefreier Verlauf des Preßmantels in Axialrichtung sichergestellt ist. Als nachteilig bei dieser Ausführung hat sich erwiesen, daß die Ausbildung eines inneren Tragkörpers als biegesteifes Element insbesondere bei breiten Preßwalzen sehr aufwendig und damit teuer ist. Außerdem stellen sich bei Durchbiegung des Tragkörpers dessen Zapfen schief, so daß sich der Tragkörper auch an seinen Enden von der Gegenwalze entfernt. Auch dadurch würde sich die Gleitoberfläche des Leistenelementes gegenüber der Gleitoberfläche des Preßschuhs vertikal in unerwünschter Weise verschieben, insbesondere bei der hoher Linienlast oder bei langen Zapfen. Ferner sind Anwendungsfälle denkbar, bei denen ein geradliniger Verlauf der Führungsleisten gar nicht erwünscht ist, sondern vielmehr die Einstellung einer vorbestimmten Biegekurve der Führungsleiste in Abhängigkeit von einer äußeren Last.

Bei Schuhpreßwalzen gemäß der eingangs erwähnten DE-A-3 311 998 läuft der Preßmantel auf einem feststehenden Tragkörper um, wobei bei ausreichend hoher Geschwindigkeit des Preßmantels eine hydro-dynamische Schmierung erreicht werden soll. In bestimmten Fällen, insbesondere dann, wenn auf der Einlaufseite der Schuhpresse kein Platz für eine Filzleitwalze vorhanden ist, besteht die Gefahr, daß das unter einer gewissen Längsspannung stehende Filzband den Preßmantel derart gegen den Einlaufbereich des Preßschuhs drückt, daß sich unter bestimmten Belastungszuständen ein hydro-dynamischer Schmierkeil nicht im erforderlichen Maße ausbilden kann. Dies kann dazu führen, daß der Preßmantel infolge nicht ausreichender Schmierung vorzeitig verschleißt. Darüberhinaus ergibt sich eine erhebliche Erwärmung des Preßmantels, eine höhere Leistungsaufnahme sowie eine Veränderung der Preßparameter.

Die Aufgabe der Erfindung besteht darin, eine Schuhpresse gemäß der eingangs genannten Art derart zu verbessern, daß ein ausreichender hydro-dynamischer Schmierkeil möglichst bei allen Betriebszuständen gewährleistet ist.

Diese Aufgabe wird bei der Schuhpresse gemäß der eingangs genannten Art dadurch gelöst, daß das Leistenelement am Preßschuh festgelegt ist.

Auf diese Weise läßt sich bei einem Preßschuh, der infolge einer äußeren Last eine Durchbiegung erleidet, auch ohne die Verwendung von Stellmitteln erreichen, daß das Leistenelement immer der Biegung des Preßschuhs unmittelbar folgt, so daß die Aufrechterhaltung eines ausreichenden hydro-dynamischen Schmierkeils auch bei Veränderung der Durchbiegung des Preßschuhs gewährleistet ist, da eine Unterbrechung oder ein Abquetschen des Schmierfilms infolge der parallelen Führung des Leistenelementes zum Preßschuh verhindert wird.

In zweckmäßiger Weiterbildung dieser Ausführung ist das Leistenelement in Bahnlaufrichtung gesehen unmittelbar vor dem Preßschuh angeordnet.

In zusätzlicher Weiterbildung dieser Ausführung ist das Leistenelement einstückig mit dem Preßschuh ausgebildet.

Das Leistenelement kann hierbei beispielsweise als Verlängerung des Preßschuhs zu dessen Einlaufseite hin ausgebildet sein, wobei eine Trennung zwischen dem Leistenelement und dem Preßschuh z.B. durch eine Hinterschneidung am Ende des Leistenelementes erreicht werden kann. Zusätzlich kann in die so gebildete Tasche zwischen Leistenelement und Preßschuh über einen axialen oder radialen Kanal Schmiermittel zugeführt werden, sofern dies erforderlich ist.

Hierzu können gemäß einer Weiterbildung der Erfindung Längsrillen in der Oberfläche des Leistenelementes mit einer Tiefe von vorzugsweise 0,2 bis 1 mm vorgesehen sein, um den Fluß des Schmiermittels in Bahnlaufrichtung zu verbessern.

Es versteht sich, daß die vorstehend genannten und die nachstehend noch zu erläuternden Merkmale nicht nur in der jeweils angegebenen Kombination, sondern auch in anderer Kombination oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig 1: eine erste Ausführung der Erfindung in stark vereinfachter schematischer Darstellung und
- Fig. 2: eine Abwandlung der Ausführung gemäß Fig. 1.

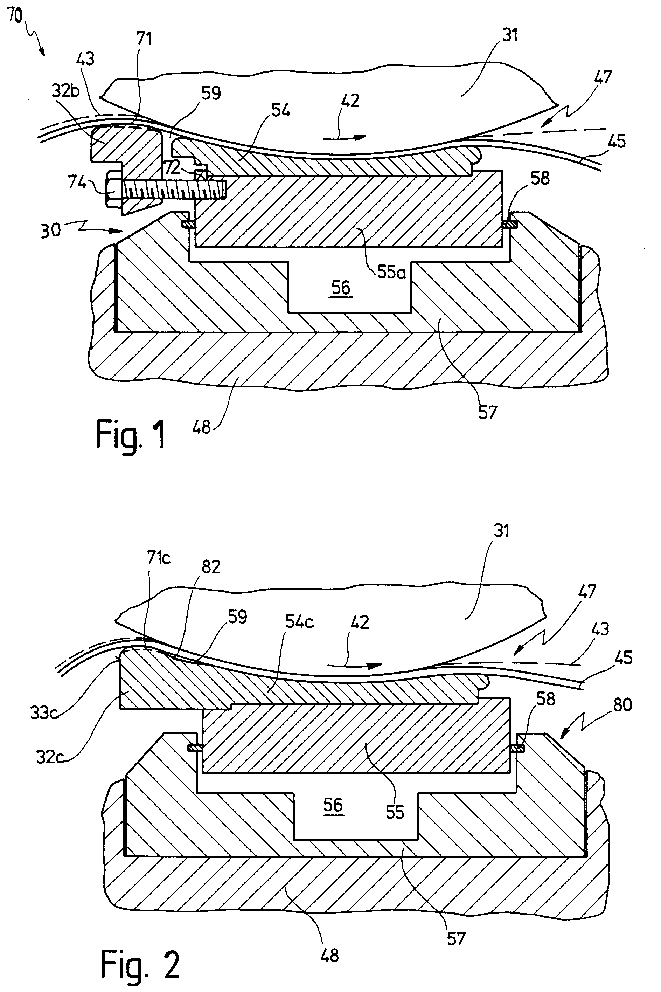

Eine erste Ausführung einer erfindungsgemäßen Schuhpresse ist in Fig. 1 insgesamt mit der Ziffer 70 bezeichnet.

Hierbei handelt es sich um eine Schuhpreßwalze 30 mit einem Preßschuh 54, der an eine darüber angeordnete Gegenwalze 31 hydraulisch anpreßbar ist. An der Einlaufseite des Preßschuhs 54 ist ein Leistenelement 32b angeordnet, das mit dem Preßschuh 54 starr verbunden ist, indem es nämlich mittels Schrauben 74 in Gewindebohrungen 72 des unterhalb des Preßschuhs 54 angeordneten Stützteils 55a festgelegt ist.

Der Preßschuh 54 der Schuhpreßwalze 30 ist auf dem Stützteil 55a gehalten und durch einen im Druckraum 56 zwischen dem Stützteil 55a und einem darunterliegenden Schuhbett 57 herrschenden Hydraulikdruck gegen die oben liegende Gegenwalze 31 anpreßbar. Der Druckraum 56 ist über eine Dichtung 58 abgedichtet. Über den Preßschuh 54 ist der Preßmantel 45 geführt, der in an sich bekannter Weise um einen stationären Tragkörper der Walze 30 umläuft und dabei an seiner dem Preßschuh 54 zugewandten Seite auf einem Schmierfilm hydro-dynamisch geschmiert ist. Der Preßmantel 45 ist hierzu in an sich bekannter Weise seitlich abgedichtet (vgl. DE-A-3 501 635).

Durch den zwischen dem Preßschuh 54 und der Gegenwalze 31 gebildeten Preßspalt 47 läuft ein Filzband, das lediglich schematisch mit der Ziffer 43 angedeutet ist und auf der eine zu entwässernde Papierbahn (nicht dargestellt) geführt ist.

Die Papierbahn bewegt sich somit zusammen mit dem Preßmantel 45 und dem Filzband 43 in Bahnlaufrichtung 42 durch den Preßspalt 47. Am Einlauf des Preßschuhs 54 bildet sich dabei ein Schmierspalt 59 aus, über den Schmiermittel in den zwischen den beiden durch den Preßmantel 45 und den Preßschuh 54 gebildeten Zwischenraum eintritt. Bei ausreichender Geschwindigkeit des Preßmantels 45 bildet sich dabei ausgehend vom Schmierspalt 59 an der Einlaufseite des Preßschuhs 54 ein hydro-dynamischer Schmierkeil aus, so daß das Preßband 45 trotz der hohen in Radialrichtung der Walze 30 auf den Preßmantel ausgeübten Belastung im Preßspalt 47 weitgehend reibungsfrei umläuft.

Voraussetzung für die Ausbildung eines ausreichenden hydro-dynamischen Schmierkeils ist dabei, daß genügend Schmiermittel über dem Schmierspalt 59 in den Zwischenraum zwischen Preßband 45 und Preßschuh 54 eintreten kann.

Ist nun das Preßband 45 schon vor dem Eintritt in den Preßspalt 47 hohen radialen Belastungen ausgesetzt, die insbesondere auf der Längsspannung im Filzband 43 und auf einer Umschlingung der Nase des Preßschuhs 54 durch das Filzband 43 und den Preßmantel 45 beruhen, so kann dies zu einer Verkleinerung des Schmierspaltes 59 und im Extremfall zu einer Abquetschung des Preßmantels 45 an der Einlaufseite des Preßschuhs 54 führen, so daß keine ausreichende hydro-dynamische Schmierung sichergestellt ist. Ein derartiger Fall kann insbesondere dann auftreten, wenn auf der Einlaufseite der Schuhpreßwalze aus Platzgründen auf eine Filzleitwalze verzichtet werden muß.

Um diese Gefahr auszuschließen, ist in Bahnlaufrichtung 42 gesehen unmittelbar vor dem Preßschuh 54 das Leistenelement 32b angeordnet, über das der Preßmantel 45 geführt ist.

Da das Leistenelement 32b infolge der starren Verbindung mit dem Stützteil 55a im wesentlichen die gleiche Durchbiegung wie der Preßschuh 54 selbst erfährt, ist ohne zusätzliche Stellelemente eine gute Führung des Preßmantels 45 an der Einlaufseite des Preßschuhs 54 sichergestellt, so daß sich eine gute hydro-dynamische Schmierung ergibt.

Zusätzlich kann das Leistenelement 32b Längsrillen 71 aufweisen, die an der der Gegenwalze 31 zugewandten Oberfläche 33b des Leistenelementes 32b in Bahnlaufrichtung verlaufen, um die Ölschmierung in diesem Bereich weiter zu verbessern. Die Tiefe der Längsrillen 71 beträgt vorzugsweise zwischen 0,2 und 1 mm.

Eine Abwandlung gegenüber der anhand von Fig. 1 beschriebenen Walze 70 ist in Fig. 2 dargestellt und insgesamt mit der Ziffer 80 bezeichnet.

Hierbei ist das Leistenelement 32c nicht mehr als selbständiges Leistenelement ausgebildet, das am Preßschuh festgelegt ist, sondern ist stattdessen einstückig mit dem Preßschuh 54c ausgebildet.

Das Leistenelement 32c stellt somit also eine Verlängerung des Preßschuhs 54c entgegen der Bahnlaufrichtung 42 dar. Der Preßmantel 45 ist wiederum über das Leistenelement 32c geführt, wobei dessen gebogene Oberfläche 33c nach der Einlaufseite eine Hinterschneidung 82 aufweist, in der sich der Schmierspalt 59 zwischen dem Preßmantel 45 und dem Preßschuh 54c ausbilden kann. Ggf. kann in diese Hinterschneidung 82 zusätzlich über seitliche oder über radiale Kanäle Schmiermittel eingeführt werden, um die hydro-dynamische Schmierung zu verbessern. Hierzu können wiederum Längsrillen 71c im Leistenelement 32c vorgesehen sein.

## Patentansprüche

1. Schuhpresse für eine Papiermaschine mit einem zwischen einer Walze und einer Gegenwalze gebildeten Preßspalt (47) mit einem hydraulisch an die Gegenwalze (31) anpreßbaren Preßschuh (54, 54c), über den ein Preßmantel (45) umläuft, wobei die Walze (70, 80) zumindest ein außerhalb des Preßspaltes (47) im wesentlichen axial angeordnetes Leistenelement (32b, 32c) aufweist, das gegen im wesentlichen radiale Kräfte abgestützt ist, dadurch gekennzeichnet, daß das Leistenelement (32b, 32c) am Preßschuh (54, 54c) festgelegt ist.

2. Schuhpresse nach Anspruch 1, dadurch gekennzeichnet, daß das Leistenelement (32, 32c) in Bahnlaufrichtung (42) gesehen unmittelbar vor dem Preßschuh (54, 54c) angeordnet ist.

3. Schuhpresse nach Anspruch 2, dadurch gekennzeichnet, daß das Leistenelement (32c) einstückig mit dem Preßschuh (54c) ausgebildet ist.

4. Schuhpresse nach einem oder mehreren der vorhergehenden Ansprüche, dadurch gekennzeichnet, daß das Leistenelement (32b, 32c) Längsrillen (71, 71c) aufweist.
